# EUROPÄISCHE PATENTSCHRIFT

(11) **EP 1 069 978 B1**
(45) Veröffentlichungstag und Bekanntmachung des Hinweises auf die Patenterteilung: **19.06.2002**
(21) Anmeldenummer: 99911745.0
(22) Anmeldetag: 06.03.1999
(51) Int. Cl.: B29C 45/00, B29C 45/16, B29C 37/00

(54) **Verfahren zum Herstellen einer Kunststoffscheibe durch Anguss-Umspritzung**
Process for manufacturing a window plastic sheet by overmoulding sprues
Procédé de fabrication d'une vitre de verre en matière plastique par surmoulage de carotte

(30) Priorität: 06.03.1998 DE 19809753
(43) Veröffentlichungstag der Anmeldung: 24.01.2001
(73) Patentinhaber: Krauss-Maffei Kunststofftechnik GmbH, 80997 München (DE)
(72) Erfinder: LICHTINGER, Peter, D-82256 Fürstenfeldbruck (DE)
(74) Vertreter: Rucker, Bernd, Dipl.-Ing.
(86) Internationale Anmeldenummer: EP9901457
(87) Internationale Veröffentlichungsnummer: WO9944802

(56) Entgegenhaltungen:
- EP-A- 0 295 587
- EP-A- 0 768 163
- DE-A- 2 938 622
- DE-A- 3 044 851
- US-A- 3 655 308
- US-A- 5 131 778

## Beschreibung

Verfahren zum Herstellen von Formteilen durch Verbundspritten sind allgemein bekannt, siehe z.B. EP-A-0 295 587,DE-A-3 044 851, DE-A-2 938 622. Die Erfindung betrifft ein Verfahren zum Herstellen von aus mehreren Komponenten bestehenden Kuststoffscheiben mit Kunststoff verarbeitenden Maschinen gemäß dem Oberbegriff von Patentanspruch 1. Bevorzugtes Anwendungsgebiet der Erfindung ist das Herstellen von Kunststoffscheiben für die Automobilindustrie.

Der für die Herstellung von Fensterscheiben verwendbare Kunststoff, wird nach dem Aushärten spröde. Das nachträgliche Abtrennen der seitlichen Anspritzung, der sogenannte Anguß, erzeugt einerseits Spannungen in den Kunststoffscheiben und zum anderen werden aufgrund des spröden Materials Partikel freigesetzt und Lagern sich teilweise auf dem Erzeugnis ab, so daß nur durch zusätzliche Arbeitsgänge (Waschen/Trocknen) ein einwandfreies Produkt hergestellt werden kann. Um die Kavität für das großflächige Formteil möglichst gleichmäßig zu befüllen, um beispielsweise Schlieren zu vermeiden, ist ein seitliches Anspritzen mit einem möglichst breiten Anguß erforderlich. Daher wird der plastifizierte Kunststoff über einen Verteilerkanal mit Filmanbindung der Kavität zugeführt. Die Filmanbindung erfolgt durch Ausbildung des Angusses nach Art einer Breitschlitzdüse.

Der Erfindung liegt nun die Aufgabe zugrunde, die mit dem Angußabtrennen, insbesondere von sprödem Material, verbundenen Nachteile zu vermeiden.

Die Lösung dieser Aufgabe erfolgt durch ein Verfahren mit den Merkmalen von Patentanspruch 1. Vorteilhafte Ausgestaltungen, insbesondere im Hinblick auf das bevorzugte Anwendungsgebiet der Erfindung, finden sich in den Unteransprüchen 2 bis 8. Mit der erfindungsgemäßen Lösung werden die eingangs genannten Probleme vermieden, da auf das Angußabtrennen ganz verzichtet werden kann. Hierzu wird vorgeschlagen, das Angußelement an dem Formteil zu belassen und in einem der nächsten Arbeitstakte zu umspritzen. Die Ausgestaltung nach den Ansprüchen 7 und 8 hat den besonderen Vorteil, daß das Angußelement des ersten Taktes einen sicheren und stabilen Sitz des umspritzten zweiten Teils gewährleistet und gleichzeitig in diesem zweiten Teil Funktionselemente vorgesehen werden können.

Nachfolgend wird die Erfindung anhand eines Ausführungsbeispiels näher erläutert. Es zeigen:
- Fig. 1:: Aufsicht auf eine Kunststoffscheibe, die in einem ersten Takt eines Spritzprägeverfahrens hergestellt worden ist.
- Fig. 2:: Umspritzung mit zweiter Komponente im Takt 2.

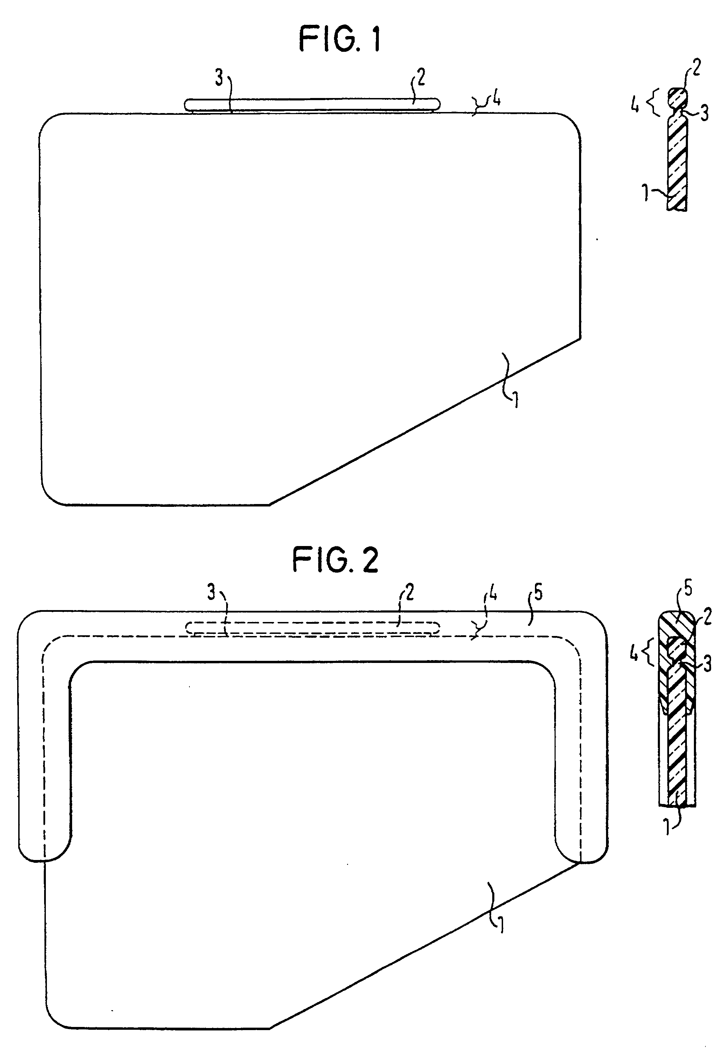

Gemäß dem bevorzugten Anwedungsgebiet der vorliegenden Erfindung wird eine Kunststoffscheibe 1, beispielsweise eine Seitenscheibe eines PKW, im Spritzprägeverfahren hergestellt, wobei der plastifizierte Kunststoff über einen Verteilerkanal 2 von im wesentlichen zylindrischen Querschnitt und eine Filmanbindung 3 einer Formteil bildenden Kavität zugeführt. Der von dem Verteilerkanal 2 und der Filmanbindung 3 gebildete Anguß 4 wird an der Seite der Kunststoffscheibe vorgesehen, die beim späteren Einbau in den PKW im Rahmen der weiteren Verarbeitung verschwindet. Fig. 2 zeigt, wie die Kunststoffscheibe 1 in einem Randbereich, der den Anguß 4 mitumfaßt, von einer zweiten Komponente 5 umspritzt ist. Diese ist in der Regel nicht transparent und kann ohne Anguß angespritzt werden. An diese zweite Komponente kann nun beispielsweise der Hebemechanismus zum Betätigen des Seitenfensters angebracht werden. Je nach Bedarf können weitere Komponenten um das Kunststofformteil ganz oder teilweise umspritzt werden.

### Bezugszeichenliste

- 1: Kunststoffscheibe
- 2: Verteilerkanal
- 3: Filmanbindung
- 4: Anguß
- 5: Zweite Komponente

## Patentansprüche

1. Verfahren zum Herstellen einer aus einer ersten Komponente bestehenden Kunststoffscheibe (1), an die weitere Komponenten (5) angespritzt werden, mit Kunststoff verarbeitenden Maschinen, wobei bei jeder Komponente plastifizierter Kunststoff in von zwei Werkzeughälften gebildete Kavitäten eingespritzt wird,
**dadurch gekennzeichnet,**
**daß** das Einspritzen der ersten Komponente, die die eigentliche Kunststoffscheibe (1) bildet, über einen im wesentlichen parallel zum Rand der Kunststoffscheibe liegenden Verteilerkanal (2) und ausgehend von diesem über eine nach Art einer Breitschlitzdüse ausgebildete Filmanbindung (3) erfolgt, daß nach Beendigung dieses Einspritzvorgangs die im Verteilerkanal erstarrte Kunststoffschmelze zusammen mit der Filmanbindung ein an der Kunststoff scheibe verbleibendes Angußelement (4) bildet, und daß das so gebildete Angußelement nachfolgend ganz oder teilweise von der weiteren Komponente (5) umspritzt wird.

2. Verfahren nach Anpruch 1, **dadurch gekennzeichnet, daß** der Verteilerkanal einen im wesentlichen zylindrischen Querschnitt besitzt.

3. Verfahren nach Anspruch 1 oder 2, **dadurch gekennzeichnet, daß** als letzte Komponente ein Material verwendet wird, das beim Angußentfemen, z.B. durch Brechen oder Schneiden, im wesentlichen keine Partikel freisetzt.

4. Verfahren nach einem der Ansprüche 1 bis 3, **dadurch gekennzeichnet, daß** die zweite Komponente (5) angußlos angespritzt und mit Funktionslementen ausgestattet wird.

5. Verfahren nach Anspruch 4, **dadurch gekennzeichnet, daß** es sich bei der Kunststoffscheibe (1) um eine Seitenscheibe für Fahrzeuge handelt und daß als zweite Komponente (5) eine Leiste angespritzt wird, die mit Funktionselementen zum Anbringen des Hebemechanismus ausgestattet ist, beispielsweise mit Löchern.

## Claims

1. Process for producing a plastic sheet (1) consisting of a first component, onto which further components (5) are moulded on, with plastic processing machines, plasticised polymer being injected into cavities formed by two mould halves in the case of each component, **characterised in that** injection of the first component forming the actual plastic sheet (1) is effected via a distribution duct (2) located substantially parallel to the edge of the plastic sheet and thence via a film gate (3) designed in the manner of a slot die, **in that** after the injection process has ended the polymer melt solidified in the distribution duct together with the film gate forms a sprue element (4) which remains on the plastic sheet, and **in that** the sprue element formed in this way is subsequently completely or partially encapsulated by the further component (5).

2. Process according to claim 1, **characterised in that** the distribution duct has a substantially cylindrical cross-section.

3. Process according to claim 1 or 2, **characterised in that** a material which liberates substantially no particles upon removal of the sprue, for example by breaking or cutting, is used as the final component.

4. Process according to any one of claims 1 to 3, **characterised in that** the second component (5) is moulded on without sprues and is equipped with functional elements.

5. Process according to claim 4, **characterised in that** the plastic sheet (1) is a side window for vehicles, and **in that** a strip is moulded on as second component (5) which is equipped with functional elements for attachment of the lifting mechanism, for example with holes.

## Revendications

1. Procédé de fabrication d'une vitre en matière plastique (1) formée par un premier composant, sur lequel sont injectés d'autres composants (5), comprenant des moules de formage de la matière plastique, une matière plastique ramollissante étant injectée pour chaque composant dans des cavités formées entre deux demi-moules, **caractérisé en ce que** le premier composant, qui forme la vitre en matière plastique (1) proprement dite, est injecté par l'intermédiaire d'un canal de distribution (2) sensiblement parallèle au bord de la vitre en matière plastique et, à partir de celui-ci, par l'intermédiaire d'un point d'injection mince (3) conçu à la manière d'une buse à fente large, **en ce que**, à la fin du processus d'injection, la matière plastique injectée solidifiée dans le canal de distribution forme avec le point d'injection mince un élément surmoulé (4) subsistant sur la vitre en matière plastique, et **en ce que** les autres composants (5) sont ensuite injectés entièrement ou partiellement autour de l'élément surmoulé ainsi formé.

2. Procédé selon la revendication 1, **caractérisé en ce que** le canal de distribution présente une section sensiblement cylindrique.

3. Procédé selon la revendication 1 ou 2, **caractérisé en ce que**, pour former le dernier composant, on utilise un matériau qui ne libère sensiblement aucune particule au moment de l'élimination de l'élément surmoulé, par rupture ou coupure par exemple.

4. Procédé selon l'une quelconque des revendications 1 à 3, **caractérisé en ce que** le deuxième composant (5) est injecté sans former d'élément surmoulé et comporte des éléments fonctionnels.

5. Procédé selon la revendication 4, **caractérisé en ce que** la vitre en matière plastique (1) est une vitre latérale pour véhicules automobiles et **en ce que** le deuxième composant (5) injecté forme une baguette, qui comporte des éléments fonctionnels, tels que des trous, destinés à la mise en place du mécanisme de levage.
